# FASCICULE DE BREVET EUROPEEN

(11) **EP 2 769 618 B1**
(45) Date de publication et mention de la délivrance du brevet: **02.05.2018**
(21) Numéro de dépôt: 14155659.7
(22) Date de dépôt: 18.02.2014
(51) Int. Cl.: A01K 13/00

(54) **Pédiluve pour bovins amélioré**
Verbesserte Klauenwanne für Rinder
Improved footbath for cattle

(30) Priorité: 21.02.2013 FR 1351494
(43) Date de publication de la demande: 27.08.2014
(73) Titulaire: La Buvette, 08090 Tournes (FR)
(72) Inventeur: Bousquet, Jean-Philippe, F-51480 BELVAL-SOUS-CHATILLON (FR)
(74) Mandataire: Rhein, Alain

(56) Documents cités:
- EP-A1- 1 704 774
- EP-A1- 1 920 652
- FR-A1- 2 841 142
- GB-A- 2 054 336
- US-S1- D 610 264

## Description

La présente invention concerne le domaine des accessoires pour l'élevage des bovins. Elle concerne plus particulièrement un pédiluve pour bovins.

Dans les soins apportés aux bovins au cours de leur élevage, une des opérations consiste à traiter leurs pieds contre diverses maladies ou infections. Pour ce faire, on les fait passer dans un pédiluve contenant le produit de traitement, ledit pédiluve étant conçu pour s'assurer que chacune des pattes fasse au moins un pas dans le pédiluve.

Le document USD 610264 divulgue un tel pédiluve avec deux bacs recevant chacun soit les pattes de gauche, soit celles de droite, et séparées d'un espace adapté pour que la bête pose effectivement toutes ses pattes dans les bacs, et qui permet la chute des déjections entre les deux bacs, pour éviter la pollution des produits. Les deux bacs sont reliés par des arceaux métalliques disposés en saillie au-dessus desdits bacs.

De plus, un tel pédiluve est constitué d'un cadre inférieur rehaussé, en matériau métallique, présentant deux portions latérales rectangulaires dont les bords contigus sont reliés par lesdits arceaux à intervalles réguliers. En outre, chaque cadre est destiné à recevoir en insertion par le haut et à servir d'appui à chaque bac.

Un tel pédiluve présente d'importants inconvénients, puisque d'une part les arceaux métalliques produisent sur les animaux une impression de vide, et donc une appréhension à l'approche du pédiluve, ce qui perturbe le mouvement d'un groupe de vaches et fait perdre du temps à l'ensemble de l'opération de traitement, d'autre part les bacs sont très longs, pour garantir que chaque patte se pose une fois dans un bac.

Par ailleurs, sa fabrication reste complexe et couteuse.

La présente invention a pour but de pallier au moins en partie à ces inconvénients. A cet effet elle propose un pédiluve pour bovins comportant deux bacs reliés par une arche centrale disposée au-dessus desdits bacs et munie d'arcs séparés par des ouvertures. Ce pédiluve est particulier en ce que ladite arche centrale présente des flancs opaques adjacents à chaque ouverture, lesdits flancs constituant des parois verticales ou sensiblement verticales s'étendant sous chaque arc, obturant le secteur situé en-dessous, de manière à rendre en grande partie invisibles les ouvertures pour un animal qui se dirige vers le bac.

Grâce à ces dispositions, les bovins perçoivent une arche centrale pleine au milieu du bac, sans aucune impression de vide. Pourtant les ouvertures sont bien présentes, et permettent tout aussi efficacement d'évacuer les déjections des animaux.

Selon d'autres caractéristiques :
- lesdits flancs peuvent constituer au moins un tiers de la hauteur de ladite arche centrale, ce qui peut être suffisant pour cacher en grande partie les ouvertures aux animaux qui se dirigent vers le pédiluve,
- lesdits flancs peuvent être inclinés, de sorte que lesdites ouvertures sont plus étroites à la base des flancs qu'à leur sommet, améliorant encore l'effet visuel recherché,
- chacun desdits bacs peut comporter une séparation de manière à former chacun deux compartiments, permettant de casser les vagues produites dans le liquide au fond du bac par l'introduction des pattes, et encourageant le bovin à poser sa première patte dans le premier compartiment, ce qui garantit la pose de chaque patte dans au moins un compartiment,
- lesdits compartiments peuvent présenter chacun une longueur correspondant sensiblement au pas d'un bovin, de préférence entre 70 et 90 centimètres (cm), permettant de cadencer les pas des bovins, avec un pas dans chaque compartiment,
- chacun desdits bacs peut comporter des reliefs, en particulier disposés sur le fond desdits bacs, permettant d'une part d'éviter le glissement des pattes sur le fond, et d'autre part de provoquer l'ouverture des onglons de manière à optimiser l'introduction du produit de traitement dans la patte du bovin,
- l'arche centrale présente une forme arrondie, de manière à guider les pattes de bovins en douceur vers lesdits bacs,
- ledit pédiluve peut être entièrement en matière plastique, permettant d'obtenir un poids plus faible et un coût réduit,
- ledit pédiluve peut être constitué d'une seule pièce, le rendant robuste et particulièrement résistant aux coups de pattes des animaux.

La présente invention concerne également un procédé de fabrication d'un pédiluve selon l'invention, utilisant la technique du rotomoulage pour fabriquer un pédiluve monobloc entièrement en matière plastique.

L'avantage apporté par la présente invention réside principalement en ce que le pédiluve selon l'invention améliore le cadencement d'avancée des bovins lors d'un traitement, principalement en évitant l'effet visuel de vide provoqué par les anneaux de l'état de la technique, et dans une variante préférée en réalisant en plus une séparation des bacs en deux compartiments, pour encourager les bovins à poser chaque patte une seule fois dans un bac du pédiluve.

La présente invention sera mieux comprise à la lecture de la description détaillée qui suit faite en référence aux figures annexées dans lesquelles :
- la figure 1 représente schématiquement en perspective une vue de trois quart de dessus d'un exemple de mode de réalisation d'un pédiluve selon l'invention ;
- la figure 2 représente schématiquement une vue de côté du pédiluve de la figure 1 ;
- la figure 3 représente schématiquement une vue d'une première extrémité du pédiluve de la figure 1 ; et
- la figure 4 représente schématiquement une vue de dessus du pédiluve de la figure 1.

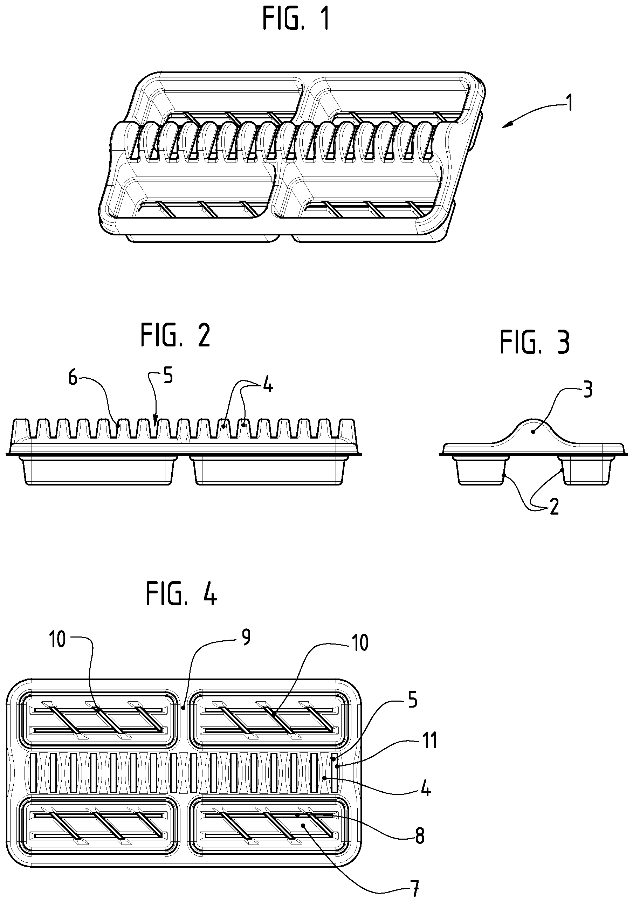

Le pédiluve 1 représenté aux figures 1 à 4 comporte deux bacs 2 et une arche centrale 3 située au-dessus desdits bacs 2. L'arche centrale 3 comporte des arcs 4 séparés par des ouvertures 5 d'une longueur sensiblement égale à la largeur de l'arche centrale 3, et d'une largeur permettant aux déjections des bovins de passer à travers sans difficulté. Une largeur d'environ 30 millimètres (mm) peut convenir. Des flancs 6 referment les arcs 4 au droit des ouvertures 5, de sorte que ce n'est qu'à l'extrémité basse des arcs 4 qu'il y a réellement une ouverture 5.

En d'autres termes, les flancs 6 constituent des parois verticales ou sensiblement verticales s'étendant sous chaque arc 4, obturant le secteur situé en-dessous. Pour ce faire, chaque flanc 6 peut être constitué par une portion de disque formant un segment circulaire dont la corde relie les extrémités de l'arc 4.

Ces flancs 6, outre leur contribution à la résistance mécanique du pédiluve 1 en renforçant l'arche centrale 3, permettent de « cacher » les ouvertures 5 aux yeux des bovins pendant la plupart du temps, et notamment quand ils se dirigent vers le pédiluve 1. Ce n'est que lorsqu'ils mettent leurs pattes dans les bacs 2, et que leurs yeux sont au-dessus des ouvertures 5 qu'ils pourraient les voir à condition de diriger leur regard vers le bas.

Cet effet visuel est encore amélioré dans un mode préféré de réalisation de l'invention dans lequel les flancs 6 sont inclinés de manière à donner une forme en V à chaque ouverture 5, plus larges au sommet de l'arche centrale 3, et plus étroites à la base de l'arche centrale 3 (i.e ; allant en s'évasant du bas vers le haut), ou inversement (i.e. allant en s'évasant du haut vers le bas).

Un tel effet visuel présente un gros avantage zootechnique. Les animaux en général, et les vaches en particulier ont peur de marcher au-dessus de structures ajourées (car elles assimilent cela au vide). C'est d'ailleurs sur ce principe que fonctionnent les « barrières canadiennes », qui consistent en une fosse recouverte de barres, sur lesquels des humains passent sans difficulté, mais les bovins sont arrêtés de manière fiables par une telle fosse. Ainsi, à l'approche du pédiluve 1 selon l'invention, la vache visualise une arche centrale 3 pleine et non vide.

Ceci a pour effet de faciliter la circulation des animaux car ils ne sont pas freinés à l'approche du pédiluve 1. C'est particulièrement important, car les pédiluves sont souvent placés dans les couloirs en sortie de salle de traite où les vaches sont libérées par groupe (de 5 à 12). Une traite dure entre cinq et dix minutes en moyenne, et il est important de ne pas créer de bouchon en sortie de salle de traite. Car si les vaches n'évacuent pas correctement la salle de traite, d'autres vaches ne peuvent pas y entrer.

Selon un mode préféré de réalisation de l'invention, et afin de réduire encore l'appréhension des vaches, les ouvertures 5 au fond de l'arche centrale 3 peuvent être munies d'un petit rebord 11 afin d'en réduire la taille.

Les flancs 6 peuvent ne couvrir qu'une partie de la hauteur des arcs 4 entre les ouvertures 5 et le sommet de l'arche centrale 3, mais de préférence au moins un tiers de cette hauteur, par exemple en partant du sommet de l'arche centrale 3.

Le fond 7 de chaque bac 2 comporte des reliefs 8, spécialement étudiés pour permettre d'une part, l'ouverture optimum des onglons des bovins afin de faciliter la pénétration du produit de traitement et empêcher, d'autre part, le dérapage des animaux.

L'arche centrale 3 présente une forme arrondie, sensiblement en demi-cercle, ce qui oriente les pattes des vaches vers les bacs 2 et évite aux animaux de se blesser en cas de chute.

Selon un mode avantageux de réalisation de l'invention, chaque bac 2 comporte une séparation 9, de manière à constituer chacun deux compartiments 10. Cette séparation 9 permet d'interrompre la longueur des bacs 2, ce qui évite la formation de vagues, susceptibles de faire éjecter le produit de traitement à l'extrémité des bacs 2. Cela permet aussi d'encourager les bovins à effectuer leur premier pas dans le premier compartiment 10, et le deuxième pas dans le deuxième compartiment 10 de l'autre côté, ce qui permet de garantir qu'avec un pédiluve 1 de longueur 1,6 mètre (m), chaque pied de bovin a trempé une fois dans le produit. Cela donne donc un pédiluve 1 bien plus court que dans l'état de la technique, où une longueur de 2 mètres a souvent été retenue pour garantir un trempage par patte.

En garantissant un trempage par patte on obtient donc la même efficacité de traitement qu'avec un bac de 2 m de long, tout en proposant un pédiluve 1 de longueur 1,6 m, ce qui permet de réduire les coûts de fabrication, et facilite le transport du pédiluve 1. Par ailleurs cela permet de limiter la quantité de produit utilisée. De plus les saletés tombées dans le premier compartiment 10 y restent, et ne viennent pas polluer le produit du deuxième compartiment 10.

Un pédiluve 1 selon l'invention peut avantageusement être en matière plastique, et fabriqué par rotomoulage et en une seule pièce. Cela permet d'une part des cadences de fabrication tout à fait intéressantes, et des coûts réduits ; le pédiluve 1 étant prêt à l'emploi immédiatement, sans aucune pièce à ajouter. D'autre part en étant monobloc, avec une arche centrale 3 solide et avec des ouvertures 5 réduites, tel que décrit ci-dessus, le pédiluve 1 est très solide, et supporte une patte malencontreusement placée sur l'arche centrale 3, sans casser. Ladite patte va simplement glisser le long de l'arche centrale 3 arrondie et se retrouver dans un bac 2. De plus, avec une arche centrale 3 arrondie et en matière plastique, la chute d'un animal sur l'arche risque beaucoup moins de le blesser qu'une arche métallique, en particulier en arceaux.

L'avantage apporté par la présente invention réside principalement en ce que le pédiluve 1 selon l'invention améliore le cadencement d'avancée des bovins lors d'un traitement, principalement en évitant l'effet visuel de vide provoqué par les anneaux de l'état de la technique, et dans une variante préférée en réalisant en plus une séparation des bacs 2 en deux compartiments 10, pour encourager les bovins à poser chaque patte une seule fois dans le pédiluve 1.

## Revendications

1. Pédiluve (1) pour bovins comportant deux bacs (2) reliés par une arche centrale (3) disposée au-dessus desdits bacs (2), et comportant des arcs (4) séparés par des ouvertures (5), **caractérisé en ce que** ladite arche centrale (3) présente des flancs (6) opaques adjacents à chaque ouverture (5), lesdits flancs (6) referment lesdits arcs (4) au droit desdites ouvertures (5), lesdits flancs (6) constituant des parois verticales ou sensiblement verticales s'étendant sous chaque arc (4), obturant le secteur situé en-dessous.

2. Pédiluve (1) selon la revendication précédente, dans lequel lesdits flancs (6) constituent au moins un tiers de la hauteur de ladite arche centrale (3).

3. Pédiluve (1) selon l'une des revendications précédentes, dans lequel lesdits flancs (6) sont inclinés, de sorte que lesdites ouvertures (5) sont plus étroites à la base des flancs (6) qu'à leur sommet.

4. Pédiluve (1) selon l'une des revendications précédentes, dans lequel chacun desdits bacs (2) comporte une séparation (9) de manière à former chacun deux compartiments (10).

5. Pédiluve (1) selon la revendication précédente, dans lequel lesdits compartiments (10) présentent chacun une longueur correspondant sensiblement au pas d'un bovin, de préférence entre 70 et 90 cm.

6. Pédiluve (1) selon l'une des revendications précédentes, dans lequel chacun desdits bacs (2) comporte des reliefs (8), en particulier disposés sur le fond (7) desdits bacs (2).

7. Pédiluve (1) selon l'une des revendications précédentes dans lequel l'arche centrale (3) présente une forme arrondie.

8. Pédiluve (1) selon l'une des revendications précédentes, entièrement en matière plastique.

9. Pédiluve (1) selon la revendication précédente, constitué d'une seule pièce.

10. Procédé de fabrication d'un pédiluve (1) selon l'une des revendications précédentes, utilisant la technique du rotomoulage pour fabriquer un pédiluve (1) monobloc entièrement en matière plastique.

## Patentansprüche

1. Klauenwanne (1) für Rinder, umfassend zwei Wannen (2), die durch einen zentralen Bogen (3) verbunden sind, der über den Wannen (2) angeordnet ist, und aufweisend durch Öffnungen (5) getrennte Bögen (4), **dadurch gekennzeichnet, dass** der zentrale Bogen (3) opake Flanken (6) neben jeder Öffnung (5) aufweist, wobei die Flanken (6) die Bögen (4) bei den Öffnungen (5) einschließen, wobei die Flanken (6) vertikale oder etwa vertikale Wände bilden, die sich unter jedem Bogen (4) erstrecken, wodurch der darunterliegende Sektor abgedichtet ist.

2. Klauenwanne (1) nach vorangehendem Anspruch, wobei die Flanken (6) mindestens ein Drittel der Höhe des zentralen Bogens (3) darstellen.

3. Klauenwanne (1) nach einem der vorangehenden Ansprüche, wobei die Flanken (6) derart geneigt sind, dass die Öffnungen (5) an der Basis der Flanken (6) enger als an ihrer Spitze sind.

4. Klauenwanne (1) nach einem der vorangehenden Ansprüche, wobei jede der Wannen (2) eine Trennung (9) derart aufweist, dass jede zwei Abteile (10) bildet.

5. Klauenwanne (1) nach vorangehendem Anspruch, wobei die Abteile (10) jeweils eine Länge vorzugsweise zwischen 70 und 90 cm aufweisen, die etwa dem Schritt eines Rindes entsprechen.

6. Klauenwanne (1) nach einem der vorangehenden Ansprüche, wobei jede der Wannen (2) Reliefs (8) aufweist, die insbesondere auf dem Boden (7) der Wannen (2) angeordnet sind.

7. Klauenwanne (1) nach einem der vorangehenden Ansprüche, wobei der zentrale Bogen (3) eine abgerundete Form aufweist.

8. Klauenwanne (1) nach einem der vorangehenden Ansprüche, vollständig aus Kunststoff.

9. Klauenwanne (1) nach vorangehendem Anspruch, gebildet aus einem einzigen Teil.

10. Verfahren zur Herstellung einer Klauenwanne (1) nach einem der vorangehenden Ansprüche, das die Technik des Rotationsformens verwendet, um eine Einblock-Klauenwanne (1) vollständig aus Kunststoff herzustellen.

## Claims

1. A footbath (1) for cattle comprising two tubs (2) connected by a central arch (3) arranged above said tubs (2), and including arcs (4) separated by openings (5), **characterized in that** said central arch (3) has opaque flanks (6) adjacent to each opening (5), said flanks (6) containing said arcs (4) aligned with said openings (5), said flanks (6) making up vertical or substantially vertical walls extending below each arc (4), closing off the sector located below.

2. The footbath (1) according to the preceding claim, wherein said flanks (6) constitute at least one third of the height of said central arch (3).

3. The footbath (1) according to one of the preceding claims, wherein said flanks (6) are tilted, such that said openings (5) are narrower at the base of the flanks (6) than at their apex.

4. The footbath (1) according to one of the preceding claims, wherein each of said tubs (2) includes a separation (9) so as each to form two compartments (10).

5. The footbath (1) according to the preceding claim, wherein said compartments (10) each have a length substantially corresponding to the step of a cow, preferably between 70 and 90 cm.

6. The footbath (1) according to one of the preceding claims, wherein each of said tubs (2) includes reliefs (8), in particular arranged on the bottom (7) of said tubs (2).

7. The footbath (1) according to one of the preceding claims, wherein the central arch (3) has a rounded shape.

8. The footbath (1) according to one of the preceding claims, made entirely from plastic.

9. The footbath (1) according to the preceding claim, made in a single piece.

10. A method for manufacturing a footbath (1) according to one of the preceding claims, using the rotational molding technique to manufacture a single-piece footbath (1) made entirely from plastic.
